# EUROPEAN PATENT SPECIFICATION

(11) **EP 1 768 371 B1**
(45) Date of publication and mention of the grant of the patent: **15.01.2014**
(21) Application number: 06121083.7
(22) Date of filing: 22.09.2006
(51) Int. Cl.: H04M 19/04

(54) **Method for arbitrating audio signal output**
Verfahren zur Arbitrierung von einem Audioausgangssignal
Méthode pour arbitrer un signal de sortie audio

(30) Priority: 23.09.2005 CN 200510108957
(43) Date of publication of application: 28.03.2007
(73) Proprietor: HTC Corporation, Taoyuan County 330 (TW)
(72) Inventor: Wang, John C., Taoyuan City (TW)
(74) Representative: Viering, Jentschura & Partner

(56) References cited:
- EP-A- 1 109 377
- EP-A- 1 111 885
- WO-A-00/70779
- US-A- 5 694 467
- US-A1- 2005 058 266

## Description

### BACKGROUND OF THE INVENTION

### Field of Invention

The invention relates to a method for arbitrating audio signal output and, in particular, a method for arbitrating audio signal output used in a portable electronic device with two or more voice communication systems.

### Related Art

There are many changes in the types of electronic devices in recent years. Since the introduction of personal computer (PC) systems, different kinds of electronic products have been invented. PC systems have evolved into modem electronic products that are now able to perform many functions, including playing video and audio signals, processing images, and network communications. However, due to their large volumes and weights, many portable electronic devices with different functions have been introduced, such as MP3 music players, digital cameras, mobile phones, and personal digital assistants (PDA).

With various software and hardware designs and advances in manufacturing techniques, all sorts of small portable electronic devices are being integrated. For example, the so-called smart phones or smart PDA's not only have normal mobile phone functions of, but the smart phones or smart PDA's are also integrated with digital camera functions and PDA functions. Such portable electronic devices are just like portable PCs.

Not only can these electronic devices execute various application programs similar to a PC system, these electronic devices are capable of connecting and communicating with two major network systems, the usual computer network system (e.g., wireless area network) and the mobile phone network system (e.g., GSM or CDMA). In such multi-functional devices, there must be a mobile phone voice communication system for processing mobile phone signals and a digital data processing system for processing digital signals.

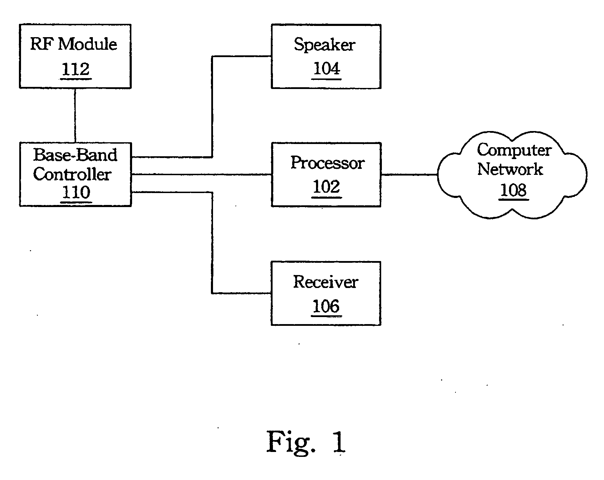

FIG. 1 is a schematic view of the internal structure of this type of electronic device. The internal processor 102 can execute many application programs and access digital data on usual computer networks 108. Therefore, if the processor 102 executes a real-time voice communication program and connects to a computer network 108, the electronic device can connect to a network phone system. On the other hand, the electronic device has a base-band controller 110 for processing mobile phone signals. Using the radio communication signals transmitted and received by a radio frequency (RF) module 112, the base-band controller 110 can connect to the usual mobile phone network, achieving functions of a mobile phone communication system.

The electronic device has two independent voice communication systems (i.e., the digital network phone system with the processor 102 and the mobile phone system with the base-band controller 110 and the RF module 112). The two voice communication systems can operate concurrently without interfering each other. However, simultaneous operation of two voice communication systems causes users lots of trouble. For example, such an apparatus usually has a speaker 104 and a receiver 106. The speaker 104 is used to play a ringing signal for the voice communication system. The receiver is used for the user to receive audio content. Thus, the sound played by the speaker 104 is clear and loud, whereas the sound played by the receiver is small and delicate. Suppose the user uses one of the voice communication systems and communicates by the receiver 106. If the other phone system has a conversation call at this moment and sends out a ring signal via the speaker 104, the user is suddenly interrupted.

Therefore, it is imperative to provide an arbitrating method to coordinate the voice signal conflict between the two phone systems when they are in use at the same time.

WO 00/70779 A discloses an arbitrating method used in a portable device, the portable device comprising a speaker and connecting to to a voice communication system, the method comprising the steps of: receiving an audio signal output from the voice communication system; determining whether the voice communication systems is in use; and playing the audio signal using the speaker.

EP 1 109 377 A also discloses method used in a portable device.

### SUMMARY OF THE INVENTION

An objective of the invention is to provide a method for arbitrating audio signal output used in a portable electronic device.

According to the present invention, an arbitrating method used in a portable device as claimed in claim 1 is provided. An electronic device according to the present invention is claimed in claim 8. The dependent claims define some examples of such a method or device, respectively.

Another objective of the invention is to provide a method for arbitrating audio signal output among multiple voice communication systems.

A further objective of the invention is to provide a method for arbitrating audio signal output that is consistent with the user's habit.

To achieve the above objectives, one embodiment of the invention is implemented in the processor of an electronic device. The processor controls a speaker and connects to several voice communication systems. In this structure, each voice communication system can be considered as an audio signal source and can be either a mobile phone communication system or a network phone communication system. In one embodiment of the invention, once the processor receives a ringing signal, it determines which communication system the ringing signal comes from and determines the operating status of other voice communication systems. If the other voice communication systems are all idle, it directly uses the speaker to play the ring signal. If any of the other voice communication systems are in use, the ringing signal is not played. A receiver plays a prompting audio signal to notify the user.

Another embodiment of the invention takes into account the situation when the user uses the speaker to play audio signals during the conversation. That is, if other voice communication systems are detected to be in use and the user uses the speaker to play voices during the conversation in the above embodiment, the speaker is used to send out the ringing signal. Otherwise, the ringing signal is temporarily not played.

### BRIEF DESCRIPTION OF THE DRAWINGS

These and other features, aspects and advantages of the invention will become apparent by reference to the following description and accompanying drawings which are given by way of illustration only, and thus are not limitative of the invention, and wherein:
FIG. 1 shows the structure of an electronic device with multiple voice communication systems;
FIG. 2A is the flowchart of an embodiment method of the invention; and
FIG. 2B is the flowchart of another embodiment method of the invention.

### DETAILED DESCRIPTION OF THE INVENTION

The present invention will be apparent from the following detailed description, which proceeds with reference to the accompanying drawings, wherein the same references relate to the same elements.

From the above discussion, it is clear that integrated portable electronic products will be the trend in the future. This type of electronic product is not only able to execute various kinds of application programs and communicate with computer networks in the same way as normal PC systems, but also has mobile phone functionality. To fulfill all these functions, an electronic device is usually equipped with at least a processor that is capable of processing digital data and computer network connections (the processor 102 in FIG. 1) and a mobile phone communication system (the base-band controller 110 and RF module 112 in FIG. 1). That is, the electronic device can be viewed as having two sets of voice communication systems. One of them is the mobile phone communication system (which may be compliant with any standard mobile phone system, such as GSM and CDMA). The other is a network phone system implemented with a real-time voice communication program executable in the processor (e.g., the currently commonly used MSN Messenger and Skype) along with a computer network (such as the computer network 108 in FIG. 1).

The processor also controls a speaker and a receiver. Generally speaking, the voice communication system can output two kinds of voice signals. One is the ringing signal that notifies the user to receive a call. The other is the voice signal in the conversation. In usual cases, the speaker outputs the ringing signal and the receiver outputs the voice signal. In the above-mentioned electronic device, there are two sets of independent voice communication systems. Therefore, we provide a method to coordinate the audio signal output between the two voice communication systems.

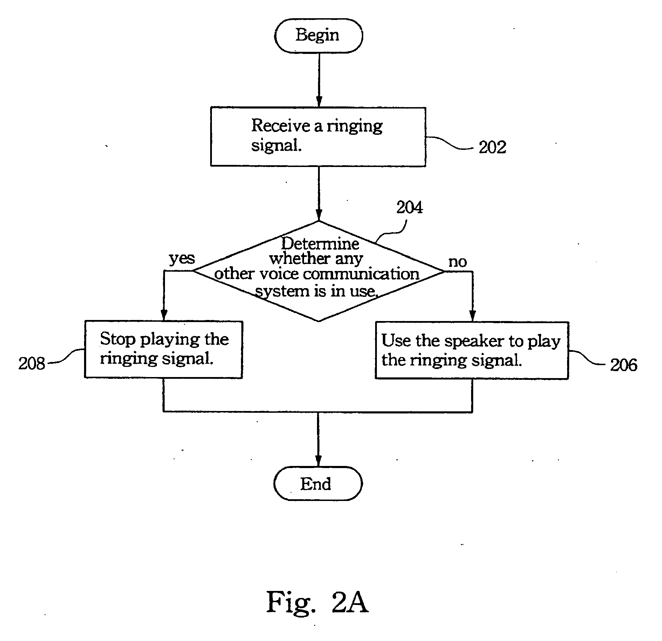

FIG. 2A shows a flowchart of an embodiment method in accord with the invention. First, the disclosed method is used in the processor of an electronic device with two or more voice communication systems, such as a mobile phone communication system and a network phone communication system. The electronic device further has a speaker and a receiver controlled by the microprocessor to play audio signals outputted by the voice communication system.

In step 202, the processor receives a ringing signal outputted by the application program and determines which voice communication system outputs that signal. Afterwards, in step 204, it determines whether any voice communication system other than the one that is sending out the ringing signal is in use. If the answer is no in step 204, it means that the user is not using the receiver. Step 206 follows, and the processor controls the speaker to play the ringing signal. If the answer is yes in step 204, it means that the user may be using the receiver for communications. If the speaker is used to play the ringing signal at this moment, the user may be shocked and confused. Therefore, step 208 follows, and the processor stops playing the ringing signal.

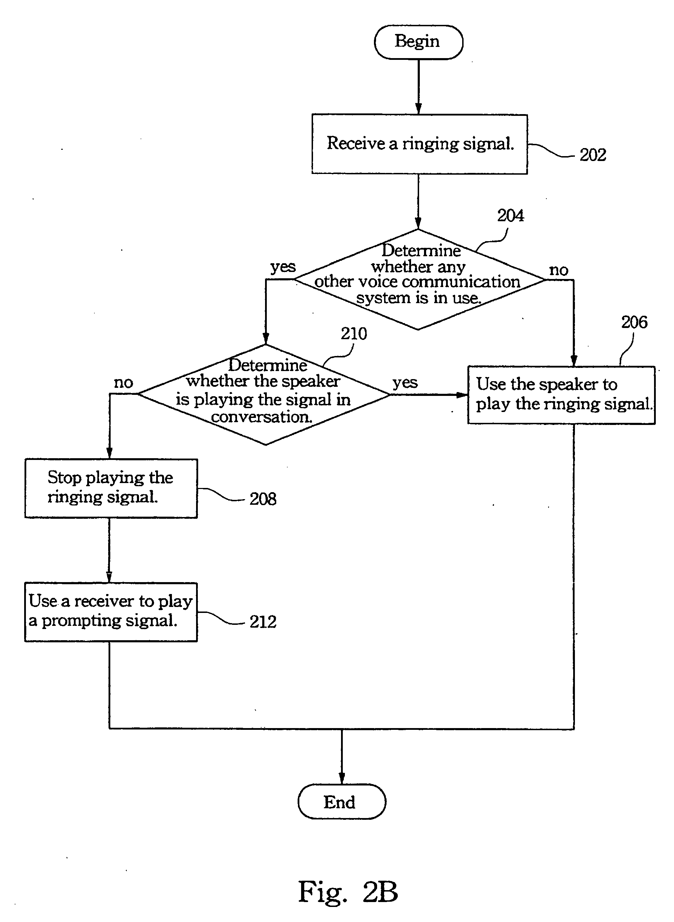

FIG. 2B shows the flowchart of another embodiment method of the invention. The procedure in FIG. 2A outlines the basic steps in the disclosed method. Therefore, other steps for the convenience of the user are added in FIG. 2B. Steps 202 and 204 are the same as in the previous embodiment. In step 204, if the determination result is no, the procedure also enters step 206 for the speaker to play the ringing signal, controlled by the processor. However, if the determination result is yes in step 204, the procedure enters step 210.

Since the processor determines that some other voice communication system is in use, it further determines in which way the user is communicating in step 210. This is because during the conversation, it may be a single user who uses the receiver to play the audio signal or multiple users who use the speaker to play the audio signal. In the case of using the speaker to play sounds, the disclosed procedure enters step 206 to directly play the ringing signal with the speaker. In the case of using the receiver to play sounds, the disclosed procedure enters step 208 to temporarily stop playing the audio signal. After step 208, although the ringing signal is stopped from being sent out, a soft prompting signal is sent via the receiver in step 212 to notify the user of the existence of this call.

The basic idea of the invention is to determine whether to play a ringing signal according to the usage of the voice communication systems in an electronic device. The commonly seen voice communication systems include the mobile phone communication system and the network phone communication systems. In practice, the disclosed embodiments do not impose any limitation on the type and number of voice communication systems. They can be adjusted according to needs.

The invention being thus described, it will be obvious that the same may be varied in many ways. Such variations are not to be regarded as a departure from the scope of the invention, and all such modifications as would be obvious to one skilled in the art are intended to be included within the scope of the following claims.

## Claims

1. An arbitrating method used in a portable device, the portable device comprising a speaker and connecting to multiple voice communication systems, the method comprising the steps of:
(a) receiving an audio signal output from a first voice communication system of the voice communication systems;
(b) determining whether any of the voice communication systems other than the first voice communication system is in use and executing step (c) if there is any or executing step (d) if there is none;
(c) stop playing the audio signal; and
(d) playing the audio signal using the speaker.

2. The method of claim 1, wherein the voice communication systems include a mobile phone communication system and a network phone communication system.

3. The method of claim 2, wherein the mobile phone communication system includes a base-band controller (110) and an RF module (112).

4. The method of claim 3, wherein the base-band controller (110) further controls a receiver and the receiver plays a prompting audio signal after step (c).

5. The method of claim 1, wherein step (b) further comprises determining whether the voice communication system which is other than the first voice communication system and which is in use is using the speaker.

6. The method of claim 5, wherein when the voice communication system which is other than the first voice communication system and which is in use is using the speaker, the step (d) is executed.

7. The method of claim 5, wherein when the voice communication system which is other than the first voice communication system and which is in use is not using the speaker, the step (c) is executed.

8. An electronic device, comprising:
multiple voice communication systems comprising a first voice communication system;
a first audio signal output device and a second audio signal output device; and
a processor (102) used to control the first audio signal output device and the second audio signal output device and to receive an audio signal from the first voice communication system;
wherein the processor (102) is adapted to receive the audio signal from the first voice communication system and to determine whether any of the voice communication systems other than the first voice communication system is in use;
if there is none, the processor (102) is adapted to stop playing the audio signal, and if there is any, the processor (102) is adapted to control the first audio signal output device to play the audio signal.

9. The electronic device of claim 8, wherein the voice communication systems include a mobile phone communication system and a network phone communication system.

10. The electronic device of claim 9, wherein the mobile phone communication system includes a base-band controller (110) and an RF module (112).

11. The electronic device of claim 8, wherein the audio signal is played by the first audio signal output device when the other voice communication systems different from the first voice communication system are all idle.

## Patentansprüche

1. Ein Arbitrierungsverfahren, das in einer tragbaren Vorrichtung verwendet wird, wobei die tragbare Vorrichtung einen Lautsprecher aufweist und mit multiplen Sprachkommunikationssystemen verbunden ist, wobei das Verfahren die folgenden Schritte aufweist:
(a) Empfangen eines Tonsignalausgangs von einem ersten Sprachkommunikationssystem der Sprachkommunikationssysteme,
(b) Ermitteln, ob irgendeines der Sprachkommunikationssysteme, das nicht das erste Sprachkommunikationssystem ist, in Gebrauch ist, und Ausführen des Schrittes (c), wenn irgendeines in Gebrauch ist, oder Ausführen des Schrittes (d), wenn keines in Gebrauch ist,
(c) Beenden des Abspielens des Tonsignals, und
(d) Abspielen des Tonsignals mittels des Lautsprechers.

2. Das Verfahren gemäß Anspruch 1, wobei die Sprachkommunikationssysteme ein Mobiltelefon-Kommunikationssystem und ein Netzwerktelefon-Kommunikationssystem aufweisen.

3. Das Verfahren gemäß Anspruch 2, wobei das Mobiltelefon-Kommunikationssystem eine Basisband-Steuereinrichtung (110) und ein RF-Modul (112) aufweist.

4. Das Verfahren gemäß Anspruch 3, wobei die Basisband-Steuereinrichtung (110) ferner einen Empfänger steuert und der Empfänger nach Schritt (c) ein Aufforderungstonsignal abspielt.

5. Das Verfahren gemäß Anspruch 1, wobei Schritt (b) ferner das Ermitteln aufweist, ob das Sprachkommunikationssystem, das nicht das erste Sprachkommunikationssystem ist und das in Gebrauch ist, den Lautsprecher verwendet.

6. Das Verfahren gemäß Anspruch 5, wobei Schritt (d) ausgeführt wird, wenn das Sprachkommunikationssystem, das nicht das erste Sprachkommunikationssystem ist und das in Gebrauch ist, den Lautsprecher verwendet.

7. Das Verfahren gemäß Anspruch 5, wobei Schritt (c) ausgeführt wird, wenn das Sprachkommunikationssystem, das nicht das erste Sprachkommunikationssystem ist und das in Gebrauch ist, den Lautsprecher nicht verwendet.

8. Eine elektronische Vorrichtung, aufweisend:
multiple Sprachkommunikationssysteme, die ein erstes Sprachkommunikationssystem aufweisen,
eine erste Tonsignalausgangsvorrichtung und eine zweite Tonsignalausgangsvorrichtung, und
einen Prozessor (102), der verwendet wird, um die erste Tonsignalausgangsvorrichtung und die zweite Tonsignalausgangsvorrichtung zu steuern und von dem ersten Sprachkommunikationssystem ein Tonsignal zu empfangen,
wobei der Prozessor (102) angepasst ist, das Tonsignal von dem ersten Sprachkommunikationssystem zu empfangen und zu ermitteln, ob irgendeines der Sprachkommunikationssysteme, das nicht das erste Sprachkommunikationssystem ist, in Gebrauch ist,
wobei der Prozessor (102) angepasst ist, das Abspielen des Tonsignals zu beenden, wenn keines in Gebrauch ist, und wobei der Prozessor (102) angepasst ist, die erste Tonsignalausgangsvorrichtung zu steuern, um das Tonsignal abzuspielen, wenn irgendeines in Gebrauch ist.

9. Die elektronische Vorrichtung gemäß Anspruch 8, wobei die Sprachkommunikationssysteme ein Mobiltelefon-Kommunikationssystem und ein Netzwerktelefon-Kommunikationssystem aufweisen.

10. Die elektronische Vorrichtung gemäß Anspruch 9, wobei das Mobiltelefon-Kommunikationssystem eine Basisband-Steuereinrichtung (110) und ein RF-Modul (112) aufweist.

11. Die elektronische Vorrichtung gemäß Anspruch 8, wobei das Tonsignal von der ersten Tonsignalausgangsvorrichtung abgespielt wird, wenn die anderen Sprachkommunikationssysteme, die nicht das erste Sprachkommunikationssystem sind, alle im Ruhezustand sind.

## Revendications

1. Procédé d'arbitrage utilisé dans un dispositif portable, le dispositif portable comprenant un haut-parleur et étant connecté à de multiples systèmes de communication vocale, le procédé comprenant les étapes ci-dessous consistant à :
(a) recevoir un signal audio généré en sortie à partir d'un premier système de communication vocale des systèmes de communication vocale ;
(b) déterminer si l'un quelconque des systèmes de communication vocale, distinct du premier système de communication vocale, est en cours d'utilisation, et exécuter l'étape (c) le cas échéant, ou exécuter l'étape (d) en l'absence d'un tel système ;
(c) interrompre la lecture du signal audio ; et
(d) lire le signal audio en utilisant le haut-parleur.

2. Procédé selon la revendication 1, dans lequel les systèmes de communication vocale incluent un système de communication téléphonique mobile et un système de communication téléphonique de réseau.

3. Procédé selon la revendication 2, dans lequel le système de communication téléphonique mobile inclut un contrôleur de bande de base (110) et un module RF (112).

4. Procédé selon la revendication 3, dans lequel le contrôleur de bande de base (110) commande en outre un récepteur, et le récepteur lit un signal audio d'incitation postérieurement à l'étape (c).

5. Procédé selon la revendication 1, dans lequel l'étape (b) consiste en outre à déterminer si le système de communication vocale qui est distinct du premier système de communication vocale, et qui est en cours d'utilisation, utilise le haut-parleur.

6. Procédé selon la revendication 5, dans lequel, lorsque le système de communication vocale qui est distinct du premier système de communication vocale, et qui est en cours d'utilisation, utilise le haut-parleur, l'étape (d) est exécutée.

7. Procédé selon la revendication 5, dans lequel, lorsque le système de communication vocale qui est distinct du premier système de communication vocale, et qui est en cours d'utilisation, n'utilise pas le haut-parleur, l'étape (c) est exécutée.

8. Dispositif électronique, comprenant :
de multiples systèmes de communication vocale incluant un premier système de communication vocale ;
un premier dispositif de génération en sortie de signal audio et un second dispositif de génération en sortie de signal audio ; et
un processeur (102) utilisé en vue de commander le premier dispositif de génération en sortie de signal audio et le second dispositif de génération en sortie de signal audio, et en vue de recevoir un signal audio en provenance du premier système de communication vocale ;
dans lequel le processeur (102) est apte à recevoir le signal audio en provenance du premier système de communication vocale, et à déterminer si l'un quelconque des systèmes de communication vocale distinct du premier système de communication vocale est en cours d'utilisation ;
en l'absence d'un tel système, le processeur (102) est apte à interrompre la lecture du signal audio, et en présence d'un tel système, le processeur (102) est apte à commander au premier dispositif de génération en sortie de signal audio de lire le signal audio.

9. Dispositif électronique selon la revendication 8, dans lequel les systèmes de communication vocale incluent un système de communication téléphonique mobile et un système de communication téléphonique de réseau.

10. Dispositif électronique selon la revendication 9, dans lequel le système de communication téléphonique mobile inclut un contrôleur de bande de base (110) et un module RF (112).

11. Dispositif électronique selon la revendication 8, dans lequel le signal audio est lu par le premier dispositif de génération en sortie de signal audio lorsque les autres systèmes de communication vocale distincts du premier système de communication vocale sont tous inactifs.
